(19)

Europäisches Patentamt

European Patent Office

Office européen des brevets

(11) **EP 4 448 608 B1**

(12) **EUROPEAN PATENT SPECIFICATION**

(45) Date of publication and mention
of the grant of the patent:
**11.02.2026 Bulletin 2026/07**

(21) Application number: **22838731.2**

(22) Date of filing: **14.12.2022**

(51) International Patent Classification (IPC):
**C08G 18/32** (2006.01)     **C08G 18/48** (2006.01)
**C08G 18/66** (2006.01)     **C08G 18/73** (2006.01)

(52) Cooperative Patent Classification (CPC):
**C08G 18/73; C08G 18/3206; C08G 18/4854;
C08G 18/6674**

(86) International application number:
**PCT/EP2022/085843**

(87) International publication number:
**WO 2023/111012 (22.06.2023 Gazette 2023/25)**

(54) **PDI BASED BEAD FOAMS**

PERLSCHAUMSTOFFE AUF PDI-BASIS

MOUSSES DE PERLES À BASE DE PDI

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.12.2021 EP 21214716**

(43) Date of publication of application:
**23.10.2024 Bulletin 2024/43**

(73) Proprietor: **BASF SE**
**67056 Ludwigshafen am Rhein (DE)**

(72) Inventors:
• **POESELT, Elmar**
  **49448 Lemfoerde (DE)**
• **GROENHAGEN, Ulrike**
  **49448 Lemfoerde (DE)**

• **HUELSMANN, Theresa**
  **49074 Osnabrueck (DE)**
• **SCHROVENWEVER, Holger**
  **49448 Lemfoerde (DE)**
• **GUTMANN, Peter**
  **67056 Ludwigshafen am Rhein (DE)**
• **DEBEAUVAIS DE VASCONCELOS, Ines**
  **67056 Ludwigshafen am Rhein (DE)**
• **MINDRUP, Saskia**
  **49448 Lemfoerde (DE)**

(74) Representative: **BASF IP Association**
**BASF SE**
**GBI - Z078**
**67056 Ludwigshafen (DE)**

(56) References cited:
**EP-B1- 2 836 543     TW-A- 202 012 483**

**Description**

The present invention relates to foamed pellets comprising a composition (C) comprising a thermoplastic polyurethane obtainable or obtained by reacting a polyisocyanate composition (IC) comprising pentamethylene diisocyanate, at least one chain extender (CE1), and a polyol composition (PC), and also relates to a process for the production of such foamed pellets. The present invention also encompasses the use of inventive foamed pellets for the production of a molded body.

Foamed pellets, which are also referred to as bead foams (or particle foams), and also molded bodies produced from them, based on thermoplastic polyurethane or other elastomers, are known (e.g. WO 94/20568 A1, WO 2007/082838 A1, WO2017/030835, WO 2013/153190 A1, WO2010/010010 A1) and have manifold possible uses.

TW202012483 and EP2836543B1 relate to a thermoplastic polyurethane, in particular to a thermoplastic polyurethane having a combination of properties of good hardness and resilience; the present invention also relates to a thermoplastic polyurethane elastomer particle and foam molded (plastic) products made therefrom; The invention also relates to a method for preparing thermoplastic polyurethane and a method for preparing foamed thermoplastic polyurethane elastomer particles. Also, WO 2021/104536 A1 relates to In order to solve the technical problem of uneven surface of foamed thermoplastic polyurethane elastomer products in the above-mentioned background art, the present invention provides a thermoplastic polyurethane foam product with high flatness and a preparation method and application thereof.

Within the meaning of the present invention, "foamed pellets" or else a "bead foam" or "particle foam" refers to a foam in bead form, wherein the average diameter of the beads is from 0.2 to 20 mm, preferably 0.5 to 15 mm and especially from 1 to 12 mm. In the case of non-spherical, e.g. elongate or cylindrical, beads, diameter means the longest dimension.

In principle, there is a need for foamed pellets or bead foams which have improved processability to give the corresponding molded bodies at minimal temperatures while maintaining advantageous mechanical properties. This is especially relevant for the fusion processes currently in widespread use, in which the input of energy for fusing the foamed pellets is introduced by an auxiliary medium, for example steam, since here improved bonding is achieved and damage to the material or foam structure is thus simultaneously reduced and at the same time sufficient bonding or fusion is obtained.

Sufficient bonding or fusion of the foamed pellets is essential in order to obtain advantageous mechanical properties of the molding produced from the foamed pellets. If bonding or fusion of the foam beads is inadequate, their properties cannot be fully utilized, and there is a resultant negative effect on the overall mechanical properties of the molding obtained. Similar considerations apply when the molded body has been weakened. In such cases, the mechanical properties are disadvantageous at the weakened points, the result being the same as mentioned above. The properties of the polymer used therefore have to be efficiently adjustable.

Known materials frequently have a very low modulus of elasticity at room temperature, so that for many applications high densities have to be achieved in order to achieve sufficient stiffness and stability. At the same time, for many applications a high rebound and good mechanical properties are to be achieved and the materials should be readily fusible for the production of moldings from the foamed pellets. In particular the properties at low temperatures often are not sufficient for many applications.

Within the context of the present invention, "advantageous mechanical properties" are to be interpreted with respect to the intended applications. The most prominent application for the subject matter of the present invention is the application in the shoe sector, where the foamed pellets can be used for molded bodies for constituent parts of the shoe in which damping and/or cushioning is relevant, for example intermediate soles and insoles.

Furthermore, it is of interest to provide materials which are at least partially based on renewable materials.

It was therefore an object of the present invention to provide foamed pellets based on polymers which have sufficient stiffness while at the same time having good mechanical properties and good processability, in particular at low temperatures. It was a further object of the present invention to provide a process for the production of the corresponding foamed pellets. Furthermore, it was an object of the present invention to provide foamed pellets which are at least partially based on non-fossil materials.

According to the invention, this object is achieved by foamed pellets comprising a composition (C) comprising thermoplastic polyurethane obtainable or obtained by reacting at least the components (i) to (iii):

(i) a polyisocyanate composition (IC) comprising pentamethylene diisocyanate;
(ii) at least one chain extender (CE1),
(iii) a polyol composition (PC),

wherein the thermoplastic polyurethane has a calculated gradient $G_{app}$ in the range of from less than 0 to -5, determined according to general formula (I):

$$G_{app} = \frac{G'(T = -30°C) - G'(T = -44°C)}{\Delta T}$$

(I)

wherein G'(T=-30°C) and G'(T=-44°C) are determined by DMA according to DIN EN ISO 6721-2011-08 at a heating rate of 2 K/min at a frequency of 1 Hz using injection molded sheets with a thickness of 2 mm and which were tempered for 20h at 100 °C.

According to the present invention, $G_{app}$ in the range of from less than 0 to -5, preferably in the range of from -0.1 to -5, in particular in the range of from -0.4 to -5, determined according to the general formula (I).

The present invention also relates to foamed pellets comprising a composition (C) comprising thermoplastic polyurethane obtainable or obtained by reacting at least the components (i) to (iii):

(i) a polyisocyanate composition (IC) comprising pentamethylene diisocyanate;
(ii) at least one chain extender (CE1),
(iii) a polyol composition (PC).

It has surprisingly been found that the use of the components used according to the invention and in particular of the specific isocyanate composition (IC) allows foamed pellets to be obtained which have a high modulus of elasticity at room temperature, so that the foamed pellets can be readily processed into molded bodies. In addition, the inventive foamed pellets feature good mechanical properties, such as for example high elasticity and good rebound, in particular at low temperatures.

Within the context of the present invention, unless otherwise stated, the rebound is determined analogously to DIN 53512, April 2000; the deviation from the standard is the test specimen height which should be 12 mm, but in this test 20 mm is used in order to avoid "penetration through" the sample and measurement of the substrate.

It has surprisingly been found that the mechanical properties of the materials are good even at temperatures below 0°C.

Advantageous properties result for the foamed pellets when the thermoplastic polyurethane has a storage modulus G' at 20°C below 55 MPa, in particular below 35 MPa, determined according to DIN EN ISO 6721-2011-08 at a heating rate of 2 K/min at a frequency of 1 Hz using injection molded sheets with a thickness of 2 mm and which were tempered for 20h at 100 °C. Generally, the storage modulus G' at 20°C is above 15 MPa.

The present invention relates to foamed pellets comprising a thermoplastic polyurethane obtainable or obtained by reacting a polyisocyanate composition (IC), a chain extender (CE1) and a polyol composition (PC). The isocyanate composition (IC) here comprises at least pentanediisocyanate.

In the context of the present invention, the materials used can be fossil based or non-fossil based. It is for example possible to use one or more non-fossil based polyols and/or one or more non-fossil based chain extenders.

A suitable method to determine the amount of fossil-based components is for example the determination of the C14 content (C14 method).

When using non-fossil based starting materials, the resulting thermoplastic polyurethanes often have a slightly yellow color. In the context of the present invention it was possible to obtain colorless materials avoiding this problem.

It has surprisingly been found that thermoplastic polyurethanes of this type can be readily processed to give foamed pellets, which in turn can be readily processed to give molded bodies which in particular have a high modulus of elasticity and a very good rebound.

Furthermore, according to the present invention it is possible to use one or more components which are non-fossil based. It is thus possible to obtain foamed pellets which have a high content of non-fossil materials.

According to the invention, the isocyanate composition (IC) comprises pentanediisocyanate in an amount of more than 80% by weight, preferably more than 90% by weight, more preferable more than 95% by weight, in particular more than 98% by weight. According to the invention, the isocyanate composition (IC) may also comprise further isocyanates. Preferably, according to the present invention, the isocyanate composition (IC) consists of pentanediisocyanate.

According to the present invention, the content of non-fossil based components used for the preparation of the thermoplastic polyurethane may be in the range of from 40 to 98%, preferably in the range of from 50 to 90%, more preferable in the range of from 60 to 80%.

Suitable further isocyanates within the context of the present invention are in particular diisocyanates, in particular aliphatic or aromatic diisocyanates, more preferably aliphatic diisocyanates.

In addition, within the context of the present invention, pre-reacted products may be used as isocyanate components, in which some of the OH components are reacted with an isocyanate in a preceding reaction step. The products obtained are reacted with the remaining OH components in a subsequent step, the actual polymer reaction, thus forming the thermoplastic polyurethane.

Aliphatic diisocyanates used are customary aliphatic and/or cycloaliphatic diisocyanates. Suitable aromatic diisocyanates are also known to the person skilled in the art.

Mixtures can in principle also be used. Examples of mixtures are mixtures comprising at least one further methylene diphenyl diisocyanate besides methylene diphenyl 4,4'-diisocyanate. The term "methylene diphenyl diisocyanate" here means diphenylmethane 2,2'-, 2,4'- and/or 4,4'-diisocyanate or a mixture of two or three isomers. It is therefore possible to use as further isocyanate, for example, diphenylmethane 2,2'- or 2,4'-diisocyanate or a mixture of two or three isomers. In this embodiment, the polyisocyanate composition can also comprise other abovementioned polyisocyanates.

If further isocyanates are used, these are present in the isocyanate composition (IC) preferably at an amount in the range from 0.1% to 20% by weight, further preferably in the range from 0.1% to 10% by weight and particularly preferably at an amount in the range from 0.5% to 5% by weight.

Preferred examples of higher-functionality isocyanates are triisocyanates, for example triphenylmethane 4,4',4"-triisocyanate, and also the cyanurates of the aforementioned diisocyanates, and the oligomers obtainable by partial reaction of diisocyanates with water, for example the biurets of the aforementioned diisocyanates, and also oligomers obtainable by controlled reaction of semiblocked diisocyanates with polyols having an average of more than two and preferably three or more hydroxyl groups.

Organic isocyanates that can be used are aliphatic, cycloaliphatic, araliphatic and/or aromatic isocyanates.

Crosslinkers can additionally also be used, for example the previously mentioned higher-functionality polyisocyanates or polyols, or else other higher-functionality molecules having a plurality of isocyanate-reactive functional groups. It is likewise possible within the context of the present invention to achieve crosslinking of the products through an excess of the isocyanate groups used in proportion to the hydroxyl groups. Examples of higher-functionality isocyanates are triisocyanates, for example triphenylmethane 4,4',4"-triisocyanate and isocyanurates, and also the cyanurates of the aforementioned diisocyanates, and the oligomers obtainable by partial reaction of diisocyanates with water, for example the biurets of the aforementioned diisocyanates, and also oligomers obtainable by controlled reaction of semiblocked diisocyanates with polyols having an average of more than two and preferably three or more hydroxyl groups.

Here, within the context of the present invention, the amount of crosslinker, that is to say of higher-functionality isocyanates and higher-functionality polyols or higher-functionality chain extenders, is no greater than 3% by weight, preferably less than 1% by weight, further preferably less than 0.5% by weight, based on the total mixture of the components.

The polyisocyanate composition may also comprise one or more solvents. Suitable solvents are known to those skilled in the art. Suitable examples are nonreactive solvents such as ethyl acetate, methyl ethyl ketone and hydrocarbons.

A polyol composition (PC) is used according to the invention. According to the invention, the polyol composition (PC) comprises at least one polyol. Suitable polyols are known in principle to those skilled in the art and described for example in "Kunststoffhandbuch [Plastics Handbook], volume 7, Polyurethane [Polyurethanes]", Carl Hanser Verlag, 3rd edition 1993, chapter 3.1.

Particular preference is given to using, as polyol (P1), polyesterols or polyetherols as polyols. It is likewise possible to use polycarbonates. Copolymers may also be used in the context of the present invention. Polyether polyols are particularly preferred. The number-average molecular weight of the polyols used according to the invention is preferably in the range from 500 to 5000 g/mol, by way of example in the range from 550 g/mol to 2000 g/mol, preferably in the range from 600 g/mol to 1500 g/mol, especially between 650 g/mol and 1000 g/mol. According to the present invention, the polyols used can be fossil based or non-fossil based.

Polyetherols, but also polyesterols, block copolymers and hybrid polyols such as for example poly(ester/amide), are suitable according to the invention. According to the invention, preferred polyetherols are polyethylene glycols, polypropylene glycols. Suitable polyols may also be selected from polyadipates, polycarbonates, polycarbonate diols and polycaprolactone.

In a further embodiment, the present invention accordingly relates to foamed pellets as described previously, wherein the polyol composition comprises a polyol selected from the group consisting of polyetherols, polyesterols, such as polycaprolactone polyols, and polycarbonate polyols.

Suitable polyols are for example those having ether and ester blocks, for example polycaprolactone having polyethylene oxide or polypropylene oxide end blocks, or else polyethers having polycaprolactone end blocks. According to the invention, preferred polyetherols are polyethylene glycols and polypropylene glycols. Suitable polyols are for example polytetramethylene gylcole or polytrimenthylene glycole. Polycaprolactone is also preferred. According to the present invention, also polyesterols may be used, in particular non fossil based polyesterols. Suitable polyesterols are for example based on succinic acid. Polyols based on castor oil or lignin based polyols may also be used.

It is also possible in accordance with the invention to use mixtures of different polyols. The polyols/the polyol composition used preferably have/has an average functionality of between 1.8 and 2.3, preferably between 1.9 and 2.2, in particular 2. The polyols used in accordance with the invention preferably have solely primary hydroxyl groups.

In an embodiment of the present invention, a polyol composition (PC) is used which comprises at least polytetrahydrofuran. According to the invention, the polyol composition may also comprise further polyols in addition to polytetrahydrofuran.

Further polyols that are suitable according to the invention are, for example, polyethers, but also polyesters, block copolymers and also hybrid polyols such as for example poly(ester/amide). Suitable block copolymers are for example those having ether and ester blocks, for example polycaprolactone having polyethylene oxide or polypropylene oxide end blocks, or else polyethers having polycaprolactone end blocks. According to the invention, preferred polyetherols are polyethylene glycols and polypropylene glycols. Polycaprolactone is also preferred as a further polyol.

According to the present invention, it is also possible to use polytetramethylengylcole or polytri-menthylenglycole which are non-fossil based or mixtures of fossil and non-fossil based polyols.

In a particularly preferred embodiment, the polytetrahydrofuran has a number-average molecular weight Mn in the range from 500 g/mol to 5000 g/mol, preferably in the range of from 500 g/mol to 2000 g/mol, further preferably in the range from 550 to 2000 g/mol, particularly preferably in the range from 650 to 1400 g/mol.

Within the context of the present invention, the composition of the polyol composition (PC) can vary within wide ranges. The polyol composition can also comprise mixtures of various polyols.

According to the invention, the polyol composition may also comprise a solvent. Suitable solvents are known *per se* to those skilled in the art.

When polytetrahydrofuran is used, the number-average molecular weight Mn of the polytetrahydrofuran is preferably in the range from 500 to 2000 g/mol. The number-average molecular weight Mn of the polytetrahydrofuran is further preferably within the range from 650 to 1400 g/mol.

In a further embodiment, the present invention also relates to foamed pellets as described previously, wherein the polyol composition comprises a polyol selected from the group consisting of polytetrahydrofurans having a number-average molecular weight Mn in the range from 500 g/mol to 5000 g/mol.

In a further embodiment, the present invention accordingly relates to foamed pellets as described previously, wherein the polyol composition comprises a polyol selected from the group consisting of polytetrahydrofurans having a number-average molecular weight Mn in the range from 500 g/mol to 2000 g/mol.

Mixtures of various polytetrahydrofurans can also be used in accordance with the invention, that is to say mixtures of polytetrahydrofurans having different molecular weights.

Preferred polyetherols according to the invention are polyethylene glycols, polypropylene glycols and polytetrahydrofurans, and also mixed polyetherols thereof. Mixtures of various polytetrahydrofurans differing in molecular weight may by way of example also be used according to the invention.

According to the invention, at least one chain extender (CE1) is also used. Suitable chain extenders are known per se to those skilled in the art. By way of example, chain extenders are compounds having two groups which are reactive towards isocyanate groups, in particular those having a molecular weight of less than 500 g/mol. Suitable chain extenders are for example diamines or diols. Diols are more preferred according to the invention. Within the scope of the present invention, mixtures of two or more chain extenders may also be used.

Suitable diols are known in principle to those skilled in the art. According to the invention, the diol preferably has a molecular weight of < 500 g/mol. According to the invention, aliphatic, araliphatic, aromatic and/or cycloaliphatic diols having a molecular weight of 50 g/mol to 220 g/mol can be used here as chain extenders, for example. Preference is given to alkanediols having 2 to 10 carbon atoms in the alkylene radical, especially di-, tri-, tetra-, penta-, hexa-, hepta-, octa-, nona- and/or decaalkylene glycols. For the present invention, particular preference is given to 1,2-ethylene glycol, propane-1,3-diol, butane-1,4-diol, pentane-1,5-diol, hexane-1,6-diol.

Suitable chain extenders (CE1) within the context of the present invention are also branched compounds such as 1,4-cyclohexanedimethanol, 2-butyl-2-ethylpropanediol, neopentyl glycol, 2,2,4-trimethylpentane-1,3-diol, pinacol, 2-ethylhexane-1,3-diol or cyclohexane-1,4-diol.

In a further embodiment, the present invention accordingly relates to foamed pellets as described previously, wherein the chain extender (CE1) is selected from the group consisting of propane-1,3-diol, ethane-1,2-diol, butane-1,4-diol, pentane-1,5-diol, hexane-1,6-diol and HQEE.

The quantitative ratios of the components used are preferably selected here as per step (b) such that a hard segment content in the range from 25% to 50% is obtained, preferably in the range of from 30% to 45%, in particular in the range of from 35% to 40%. The hard segment content calculated according to the formula (II) unless otherwise noted:

$$HSC = \frac{n_{chainextender}\,(M_{chainextender} + M_{diisocyanate})}{m_{total}}$$

(II)

The present invention therefore is also directed to foamed pellets as described previously, wherein the hard segment content of the thermoplastic polyurethane is in the range of from 25% to 50% calculated according to the formula

$$HSC = \frac{n_{chainextender}(M_{chainextender} + M_{diisocyanate})}{m_{total}}$$

(II)

In the context of the present invention it is also possible that the hard segment content of the thermoplastic polyurethane is below 25%.

In the context of the present invention, the composition (C) may also comprise further components such as further polymers. Suitable polymers (P2) might for example be selected from the group consisting of polyethylene, polyamides, polypropylene, polystyrene, polyethylene, polypropylene, polylactic acid, polybutylene succinate, polyethylene terephthalate, ethylene vinylacetat copolymers or from the group of thermoplastic elastomers. The further polymers may also be fossil based or non-fossil based. Suitable amounts of the further polymer may be in the range of from 0.1 to 30 % by weight based on the weight of the composition (C), preferably in the range of from 3 to 25 % by weight based on the weight of the composition (C), more preferable in the range of from 5 to 15 % by weight based on the weight of the composition (C).

According to a further embodiment, the present invention therefore is also directed to foamed pellets as described previously, wherein the composition (C) comprises at least one further polymer (P2) in an amount in the range of from 0.1 to 30 % by weight based on the weight of the composition (C), preferably in the range of from 3 to 25% by weight based on the weight of the composition (C), in particular in the range of from 5 to 15 % by weight based on the weight of the composition (C).

In case composition (C) comprises at least one further polymer (P2), the hard segment content of the thermoplastic polyurethane preferably is in the range of from 20% to 40%.

Unless otherwise stated, the weight-average molecular weights Mn of the thermoplastic block copolymers are determined within the context of the present invention by means of GPC, dissolved in HFIP (hexafluoroisopropanol). The molecular weight is determined using two GPC columns arranged in series (PSS-Gel; 100 A; 5 $\mu$; 300*8 mm, Jordi-Gel DVB; mixed bed; 5 $\mu$; 250*10 mm; column temperature 60°C; flow 1 ml/min; RI detector). Calibration is performed here with polymethyl methacrylate (EasyCal; from PSS, Mainz) and HFIP is used as eluent.

It has been found that thermoplastic polyurethanes or blends according to the present invention show characteristic behavior in dynamic mechanical thermal analysis.

For samples measured after tempering for 20 hours at 100 °C, dynamic mechanical thermal analysis (DMA measurements) were carried out according to DIN EN ISO 6721-2011-08 at a heating rate of 2 K/min at a frequency of 1 Hz using injection molded sheets with a thickness of 2 mm and which were tempered for 20h at 100 °C. The calculated gradient G$_{app}$, defined as:

$$G_{app} = \frac{G'(T = -30°C) - G'(T = -44°C)}{\Delta T}$$

(I)

with the storage modulus for G'$_{T=-30°C}$ and G'$_{T=-44°C}$ determined with DMA measurement in the range of the main application temperatures of between T=-30°C-(-44)°C, resulting in a $\Delta T$ of 14°C, preferably is in the range of from less than 0 to -5, more preferably is in a range of from -0.4 to -5, particularly preferably in a range of from -0.9 to -3.5.

To determine the respective features for foamed thermoplastic polyurethanes, the samples are shredded, and then tempered for 20 hours at 100 °C prior to the measurement.

The present invention also relates to a composition (C) comprising thermoplastic polyurethane obtainable or obtained by reacting at least the components (i) to (iii):

(i) a polyisocyanate composition (IC) comprising pentamethylene diisocyanate;
(ii) at least one chain extender (CE1),
(iii) a polyol composition (PC).

Preferably, the hard segment content of the thermoplastic polyurethane is in the range of from 25% to 50% calculated according to the formula (II) as disclosed above.

In a further aspect, the present invention also relates to a process for the production of foamed pellets. In this case, the present invention relates to a process for the production of foamed pellets comprising the steps of

(i) providing a composition (C) comprising a thermoplastic polyurethane, wherein the thermoplastic polyurethane is obtained or obtainable by reacting at least the components (a) to (c):

(a) a polyisocyanate composition (IC) comprising pentamethylene diisocyanate;
(b) at least one chain extender (CE1),
(c) a polyol composition (PC);

(ii) impregnating or mixing the composition (C) with a blowing agent under pressure;
(iii) expanding the composition (C) by means of pressure decrease,

wherein the thermoplastic polyurethane has a calculated gradient $G_{app}$ in the range of from less than 0 to -5, determined according to general formula (I):

$$G_{app} = \frac{G'(T = -30°C) - G'(T = -44°C)}{\Delta T}$$

(I)

wherein G'(T=-30°C) and G'(T=-44°C) are determined by DMA according to DIN EN ISO 6721-2011-08 at a heating rate of 2 K/min at a frequency of 1 Hz using injection molded sheets with a thickness of 2 mm and which were tempered for 20h at 100 °C.

Within the context of the present invention, the composition (C) can be used here in the form of a melt or in the form of pellets.

As regards preferred embodiments of the process, suitable feedstocks or mixing ratios, reference is made to the statements above which apply correspondingly.

The inventive process may comprise further steps, for example temperature adjustments.

The unexpanded polymer mixture of the composition (C) required for the production of the foamed pellets is produced in a known manner from the individual components and also optionally further components such as, by way of example, processing aids, stabilizers, compatibilizers or pigments. Examples of suitable processes are conventional mixing processes with the aid of a kneader, in continuous or batchwise mode, or with the aid of an extruder, for example a co-rotating twin-screw extruder.

In the case of compatibilizers or auxiliaries, such as for example stabilizers, these may also already be incorporated into the components during the production of the latter. The individual components are usually combined before the mixing process, or metered into the apparatus that performs the mixing. In the case of an extruder, the components are all metered into the intake and conveyed together into the extruder, or individual components are added in via a side feed.

The processing takes place at a temperature at which the components are present in a plastified state. The temperature depends on the softening or melting ranges of the components, but must be below the decomposition temperature of each component. Additives such as pigments or fillers or others of the abovementioned customary auxiliaries are not also melted, but rather incorporated in the solid state.

Further embodiments using well-established methods are also possible here, with the processes used in the production of the starting materials being able to be integrated directly into the production.

For instance, it would for example be possible in the case of the belt process, to introduce the styrene polymer, the impact modifier and also fillers or colorants directly at the end of the belt at which the material is fed into an extruder in order to obtain lenticular granules. It is also possible to introduce the material when using an extrusion process.

Some of the abovementioned customary auxiliaries can be added to the mixture in this step.

The inventive foamed pellets generally have a bulk density of from 50 g/l to 200 g/l, preferably 60 g/l to 180 g/l, particularly preferably 80 g/l to 150 g/l. The bulk density is measured analogously to DIN ISO 697, where, in contrast to the standard, the determination of the above values involves using a vessel having a 10 l volume instead of a vessel having a 0.5 l volume, since, especially for foam beads having low density and high mass, measurement using only 0.5 l volume is too imprecise.

As stated above, the diameter of the foamed pellets is from 0.5 to 30 mm, preferably 1 to 15 mm and especially from 3 to 12 mm. For non-spherical, for example elongate or cylindrical foamed pellets, diameter means the longest dimension.

The foamed pellets can be produced by the well-established methods known in the prior art by means of

(I') providing an inventive composition (C);

(ii') impregnating the composition with a blowing agent under pressure;

(iii') expanding the composition by means of pressure decrease.

The amount of blowing agent is preferably 0.1 to 40 parts by weight, especially 0.5 to 35 parts by weight and particularly preferably 1 to 30 parts by weight, based on 100 parts by weight of the amount used of composition (C).

One embodiment of the abovementioned process comprises

(I') providing an inventive composition (C) in the form of pellets;

(ii') impregnating the pellets with a blowing agent under pressure;

(iii') expanding the pellets by means of pressure decrease.

A further embodiment of the abovementioned process comprises a further step:

(I') providing an inventive composition (C) in the form of pellets;

(ii') impregnating the pellets with a blowing agent under pressure;

(iii'-a) reducing the pressure to standard pressure without foaming the pellets, optionally by means of prior reduction of the temperature

(iii'-b) foaming the pellets by means of a temperature increase.

The unexpanded pellets preferably have an average minimal diameter of 0.2 - 10 mm here (determined via 3D evaluation of the pellets, for example via dynamic image analysis with the use of a PartAn 3D optical measuring apparatus from Microtrac).

The individual pellets generally have an average mass in the range from 0.1 to 50 mg, preferably in the range from 4 to 40 mg and particularly preferably in the range from 7 to 32 mg. This average mass of the pellets (particle weight) is determined as the arithmetic average by means of three weighing operations of in each case 10 pellet particles.

One embodiment of the abovementioned process comprises impregnating the pellets with a blowing agent under pressure in step (I) and subsequently expanding the pellets in step (II):

(I) impregnating the pellets in the presence of a blowing agent under pressure at elevated temperatures in a suitable, closed reaction vessel (e.g. autoclaves)

(II) sudden depressurization without cooling.

The impregnation in step (I) can take place here in the presence of water and optionally suspension auxiliaries, or solely in the presence of the blowing agent and in the absence of water.

Suitable suspension auxiliaries are, for example, water-insoluble inorganic stabilizers, such as tricalcium phosphate, magnesium pyrophosphate, metal carbonates; and also polyvinyl alcohol and surfactants, such as sodium dodecylarylsulfonate. They are typically used in amounts of from 0.05 to 10% by weight, based on the inventive composition.

Depending on the chosen pressure, the impregnation temperatures are in the range from 100° C-200°C, where the pressure in the reaction vessel is between 2-150 bar, preferably between 5 and 100 bar, particularly preferably between 20 and 60 bar, the impregnation time generally being from 0.5 to 10 hours.

Carrying out the process in suspension is known to those skilled in the art and has been described, by way of example, extensively in WO2007/082838.

When carrying out the process in the absence of the blowing agent, care must be taken to avoid aggregation of the polymer pellets.

Suitable blowing agents for carrying out the process in a suitable closed reaction vessel are by way of example organic liquids and gases which are in a gaseous state under the processing conditions, such as hydrocarbons or inorganic gases or mixtures of organic liquids or gases with inorganic gases, where these may also be combined.

Examples of suitable hydrocarbons are halogenated or non-halogenated, saturated or unsaturated aliphatic hydrocarbons, preferably non-halogenated, saturated or unsaturated aliphatic hydrocarbons.

Preferred organic blowing agents are saturated, aliphatic hydrocarbons, in particular those having 3 to 8 carbon atoms, for example butane or pentane.

Suitable inorganic gases are nitrogen, air, ammonia or carbon dioxide, preferably nitrogen or carbon dioxide, or mixtures of the abovementioned gases.

In a further embodiment, the impregnation of the pellets with a blowing agent under pressure comprises processes and subsequent expansion of the pellets in steps ($\alpha$) and ($\beta$):

($\alpha$) impregnating the pellets in the presence of a blowing agent under pressure at elevated temperatures in an extruder

(β) pelletizing the composition emerging from the extruder under conditions that prevent uncontrolled foaming.

Suitable blowing agents in this process version are volatile organic compounds having a boiling point at standard pressure, 1013 mbar, of -25°C to 150°C, especially -10°C to 125°C. Of good suitability are hydrocarbons (preferably halogen-free), especially C4-10-alkanes, for example the isomers of butane, of pentane, of hexane, of heptane and of octane, particularly preferably isobutane. Further possible blowing agents are moreover sterically more demanding compounds such as alcohols, ketones, esters, ethers and organic carbonates.

In this case, the composition is mixed with the blowing agent, which is supplied to the extruder, under pressure in step (ii) in an extruder while melting. The mixture comprising blowing agent is extruded and pelletized under pressure, preferably using counterpressure controlled to a moderate level (an example being underwater pelletization). The melt strand foams in the process, and pelletization gives the foamed pellets.

Carrying out the process via extrusion is known to those skilled in the art and has been described, by way of example, extensively in WO2007/082838, and also in WO 2013/153190 A1.

Extruders that can be used are any of the conventional screw-based machines, in particular single-screw and twin-screw extruders (e.g. ZSK type from Werner & Pfleiderer), co-kneaders, Kombiplast machines, MPC kneading mixers, FCM mixers, KEX kneading screw-extruders and shear-roll extruders, as have been described by way of example in Saechtling (ed.), Kunststoff-Taschenbuch [Plastics Handbook], 27th edition, Hanser-Verlag, Munich 1998, chapters 3.2.1 and 3.2.4. The extruder is usually operated at a temperature at which the composition (C) is present as a melt, for example at 120°C to 250°C, in particular 150 to 210°C, and at a pressure, after addition of the blowing agent, of 40 to 200 bar, preferably 60 to 150 bar, particularly preferably 80 to 120 bar, in order to ensure homogenization of the blowing agent with the melt.

The process here can be conducted in an extruder or in an arrangement composed of one or more extruders. Thus, by way of example, the components can be melted and blended, and a blowing agent injected, in a first extruder. In the second extruder, the impregnated melt is homogenized and the temperature and/or the pressure is adjusted. If, by way of example, three extruders are combined with one another, the mixing of the components and the injection of the blowing agent can also be split between two different process sections. If, as is preferred, only one extruder is used, all of the process steps - melting, mixing, injection of the blowing agent, homogenization and adjustment of the temperature and/or of the pressure - are carried out in a single extruder.

As an alternative and in accordance with the methods described in WO 2014/150122 or WO 2014/150124 A1, the corresponding foamed pellets, which are optionally even already colored, can be produced directly from the pellets in that the corresponding pellets are saturated with a supercritical liquid, are removed from the supercritical liquid, followed by

(i") immersing the article in a heated fluid or
(ii") irradiating the article with energetic radiation (e.g. infrared or microwave irradiation).

Examples of suitable supercritical liquids are those described in WO2014150122 or, e.g. carbon dioxide, nitrogen dioxide, ethane, ethylene, oxygen or nitrogen, preferably carbon dioxide or nitrogen.

The supercritical liquid here can also comprise a polar liquid with Hildebrand solubility parameter equal to or greater than 9 MPa$^{-1/2}$.

The supercritical fluid or the heated fluid may also comprise a colorant here, as a result of which a colored, foamed article is obtained.

The present invention further provides a molded body produced from the inventive foamed pellets.

The corresponding molded bodies can be produced by methods known to those skilled in the art.

A process preferred here for the production of a foam molding comprises the following steps:

(A) introducing the inventive foamed pellets into an appropriate mold;
(B) fusing the inventive foamed pellets from step (i).

The fusing in step (B) is preferably effected in a closed mold, wherein the fusing can be effected by means of steam, hot air (as described for example in EP1979401B1) or energetic radiation (microwaves or radio waves).

The temperature during the fusing of the foamed pellets is preferably below or close to the melting temperature of the polymer from which the bead foam was produced. For the widely used polymers, the temperature for the fusing of the foamed pellets is accordingly between 100°C and 180°C, preferably between 120 and 150°C.

Temperature profiles/residence times can be ascertained individually here, for example in analogy to the processes described in US20150337102 or EP2872309B1.

The fusion by way of energetic radiation generally takes place in the frequency range of microwaves or radio waves, optionally in the presence of water or of other polar liquids, for example microwave-absorbing hydrocarbons having polar groups (such as for example esters of carboxylic acids and of diols or of triols, or glycols and liquid polyethylene glycols), and can be effected in analogy to the processes described in EP3053732A or WO16146537.

As stated above, the foamed pellets can also comprise colorants. Colorants can be added here in various ways.

In one embodiment, the foamed pellets produced can be colored after production. In this case, the corresponding foamed pellets are contacted with a carrier liquid comprising a colorant, where the carrier liquid (CL) has a polarity that is suitable for sorption of the carrier liquid into the foamed pellets to occur. This can be carried out in analogy to the methods described in the EP application having application number 17198591.4.

Examples of suitable colorants are inorganic or organic pigments. Examples of suitable natural or synthetic inorganic pigments are carbon black, graphite, titanium oxides, iron oxides, zirconium oxides, cobalt oxide compounds, chromium oxide compounds, copper oxide compounds. Examples of suitable organic pigments are azo pigments and polycyclic pigments.

In a further embodiment, the color can be added during the production of the foamed pellets. By way of example, the colorant can be added into the extruder during the production of the foamed pellets via extrusion.

As an alternative, material that has already been colored can be used as starting material for the production of the foamed pellets, this being extruded - or being expanded in the closed vessel by the processes mentioned above.

In addition, in the process described in WO 2014/150122, the supercritical liquid or the heated liquid may comprise a colorant.

As stated above, the inventive moldings have advantageous properties for the abovementioned applications in the shoe and sports shoe sector requirement.

In this case, the tensile and compression properties of the molded bodies produced from the foamed pellets are distinguished by the fact that the tensile strength is above 600 kPa (DIN EN ISO 1798, April 2008) and the elongation at break is above 100% (DIN EN ISO 1798, April 2008) and the compressive stress is above 15 kPa at 10% compression (analogous to DIN EN ISO 844, November 2014; the deviation from the standard being that the height of the sample is 20 mm instead of 50 mm and therefore the test speed is adjusted to 2 mm/min).

The rebound resilience of the molded bodies produced from the foamed pellets is above 55% (analogous to DIN 53512, April 2000; the deviation from the standard is the test specimen height which should be 12 mm, but in this test 20 mm is used in order to avoid "penetration through" the sample and measurement of the substrate).

As stated above, there is a relationship between the density and compression properties of the molded bodies produced. The density of the moldings produced is advantageously from 75 to 375 $kg/m^3$, preferably from 100 to 300 $kg/m^3$, particularly preferably from 150 to 200 $kg/m^3$ (DIN EN ISO 845, October 2009).

The ratio of the density of the molding to the bulk density of the inventive foamed pellets here is generally between 1.5 and 2.5, preferably 1.8 to 2.0.

The invention additionally provides for the use of inventive foamed pellets for the production of a molded body for shoe intermediate soles, shoe insoles, shoe combisoles, bicycle saddles, bicycle tires, damping elements, cushioning, mattresses, underlays, grips, protective films, in components in automobile interiors and exteriors, in balls and sports equipment or as floor covering, especially for sports surfaces, track and field surfaces, sports halls, children's playgrounds and pathways. The invention additionally provides for the use of inventive foamed pellets for the production of consumer goods or industrial goods, parts in the automotive sector or packaging.

Preference is given to using inventive foamed pellets for the production of a molded body for shoe intermediate soles, shoe insoles, shoe combisoles or a cushioning element for shoes. Here, the shoe is preferably an outdoor shoe, sports shoe, sandals, boot or safety shoe, particularly preferably a sports shoe.

The present invention accordingly further also provides a molded body, wherein the molded body is a shoe combisole for shoes, preferably for outdoor shoes, sports shoes, sandals, boots or safety shoes, particularly preferably sports shoes, in particular a part of the outer shoe sole, part of a soccer shoe.

The present invention accordingly further also provides a molded body, wherein the molded body is an intermediate sole for shoes, preferably for outdoor shoes, sports shoes, sandals, boots or safety shoes, particularly preferably sports shoes, in particular a part of the outer shoe sole, part of a soccer shoe.

The present invention accordingly further also provides a molded body, wherein the molded body is an insole for shoes, preferably for outdoor shoes, sports shoes, sandals, boots or safety shoes, particularly preferably sports shoes, in particular a part of the outer shoe sole, part of a soccer shoe.

The present invention accordingly further also provides a molded body, wherein the shaped body is a cushioning element for shoes, preferably for outdoor shoes, sports shoes, sandals, boots or safety shoes, particularly preferably sports shoes.

The cushioning element here can by way of example be used in the heel region or forefoot region.

The present invention therefore also further provides a shoe in which the inventive molded body is used as midsole, intermediate sole or cushioning in, for example, the heel region or forefoot region, wherein the shoe is preferably an outdoor shoe, sports shoe, sandal, boot or safety shoe, particularly preferably a sports shoe.

In a further aspect, the present invention also relates to foamed pellets obtained or obtainable by an inventive process.

The block copolymers used according to the invention typically have a hard phase composed of aromatic polyester and a soft phase. On account of their predetermined block structure, which results from the construction from molecules that are already polymeric *per se* and therefore long-chained - such as a polytetrahydrofuran building block and a polybutylene terephthalate building block, the block copolymers used according to the invention have a good phase separation between the resilient soft phase and the rigid hard phase. This good phase separation manifests itself in a property which is referred to as high "snapback" but can be characterized only with great difficulty using physical methods and leads to particularly advantageous properties of the inventive foamed pellets.

On account of the good mechanical properties and good temperature behavior, the inventive polymer foams are particularly suitable for the production of molded bodies. Molded bodies can by way of example be produced from the inventive foamed pellets by fusion or bonding.

In a further aspect, the present invention also relates to the use of inventive foamed pellets or of foamed pellets obtained or obtainable by an inventive process for the production of molded bodies. In a further embodiment, the present invention accordingly also relates to the use of inventive foamed pellets, or of foamed pellets obtained or obtainable by an inventive process, for the production of molded bodies, wherein the molded body is produced by means of fusion or bonding of the beads to one another.

The molded bodies obtained according to the invention are suitable, for example, for the production of shoe soles, parts of a shoe sole, in particular a part of the outer shoe sole, part of a soccer shoe, bicycle saddles, cushioning, mattresses, underlays, grips, protective films, components in automobile interiors and exteriors, in balls and sports equipment or as floor covering and wall paneling, especially for sports surfaces, track and field surfaces, sports halls, children's playgrounds and pathways.

In a further embodiment, the present invention accordingly also relates to the use of inventive foamed pellets, or of foamed pellets obtained or obtainable by an inventive process, for the production of molded bodies, wherein the molded body is a shoe sole, part of a shoe sole, in particular a part of the outer shoe sole, part of a soccer shoe, a bicycle saddle, cushioning, a mattress, underlay, grip, protective film, a component in automobile interiors and exteriors.

In a further aspect, the present invention also relates to the use of the inventive foamed pellets or foamed beads in balls and sports equipment or as floor covering and wall paneling, especially for sports surfaces, track and field surfaces, sports halls, children's playgrounds and pathways.

In a further aspect, the present invention also relates to a hybrid material comprising a matrix composed of a polymer (PM) and foamed pellets according to the present invention. Materials which comprise foamed pellets and a matrix material are referred to as hybrid materials within the context of the present invention. Here, the matrix material may be composed of a compact material or likewise of a foam.

Polymers (PM) suitable as matrix material are known *per se* to those skilled in the art. By way of example, ethylene-vinyl acetate copolymers, epoxide-based binders or else polyurethanes are suitable within the context of the present invention. In this case, polyurethane foams or else compact polyurethanes, such as for example thermoplastic polyurethanes, are suitable according to the invention.

According to the invention, the polymer (PM) is chosen here such that there is sufficient adhesion between the foamed pellets and the matrix to obtain a mechanically stable hybrid material.

The matrix may completely or partially surround the foamed pellets here. According to the invention, the hybrid material can comprise further components, by way of example further fillers or also pellets. According to the invention, the hybrid material can also comprise mixtures of different polymers (PM). The hybrid material can also comprise mixtures of foamed pellets.

Foamed pellets that can be used in addition to the foamed pellets according to the present invention are known *per se* to those skilled in the art. Foamed pellets composed of thermoplastic polyurethanes are particularly suitable within the context of the present invention.

In one embodiment, the present invention accordingly also relates to a hybrid material comprising a matrix composed of a polymer (PM), foamed pellets according to the present invention and further foamed pellets composed of a thermoplastic polyurethane.

Within the context of the present invention, the matrix consists of a polymer (PM). Examples of suitable matrix materials within the context of the present invention are elastomers or foams, especially foams based on polyurethanes, for example elastomers such as ethylene-vinyl acetate copolymers or else thermoplastic polyurethanes.

The present invention accordingly also relates to a hybrid material as described previously, wherein the polymer (PM) is an elastomer. The present invention additionally relates to a hybrid material as described previously, wherein the polymer (PM) is selected from the group consisting of ethylene-vinyl acetate copolymers and thermoplastic polyurethanes.

In one embodiment, the present invention also relates to a hybrid material comprising a matrix composed of an ethylene-vinyl acetate copolymer and foamed pellets according to the present invention.

In a further embodiment, the present invention relates to a hybrid material comprising a matrix composed of an ethylene-vinyl acetate copolymer, foamed pellets according to the present invention and further foamed pellets composed for example of a thermoplastic polyurethane.

In one embodiment, the present invention relates to a hybrid material comprising a matrix composed of a thermoplastic polyurethane and foamed pellets according to the present invention.

In a further embodiment, the present invention relates to a hybrid material comprising a matrix composed of a thermoplastic polyurethane, foamed pellets according to the present invention and further foamed pellets composed for example of a thermoplastic polyurethane.

Suitable thermoplastic polyurethanes are known *per se* to those skilled in the art. Suitable thermoplastic polyurethanes are described, for example, in "Kunststoffhandbuch [Plastics Handbook], volume 7, Polyurethane [Polyurethanes]", Carl Hanser Verlag, 3rd edition 1993, chapter 3.

Within the context of the present invention, the polymer (PM) is preferably a polyurethane. "Polyurethane" within the meaning of the invention encompasses all known resilient polyisocyanate polyaddition products. These include, in particular, compact polyisocyanate polyaddition products, such as viscoelastic gels or thermoplastic polyurethanes, and resilient foams based on polyisocyanate polyaddition products, such as flexible foams, semirigid foams or integral foams. Within the meaning of the invention, "polyurethanes" are also understood to mean resilient polymer blends comprising polyurethanes and further polymers, and also foams of these polymer blends. The matrix is preferably a cured, compact polyurethane binder, a resilient polyurethane foam or a viscoelastic gel.

Within the context of the present invention, a "polyurethane binder" is understood here to mean a mixture which consists to an extent of at least 50% by weight, preferably to an extent of at least 80% by weight and especially to an extent of at least 95% by weight, of a prepolymer having isocyanate groups, referred to hereinafter as isocyanate prepolymer. The viscosity of the polyurethane binder according to the invention is preferably in a range here from 500 to 4000 mPa.s, particularly preferably from 1000 to 3000 mPa.s, measured at 25°C according to DIN 53 018.

In the context of the invention, "polyurethane foams" are understood to mean foams according to DIN 7726.

The density of the matrix material is preferably in the range from 1.2 to 0.01 $g/cm^3$. The matrix material particularly preferably is a resilient foam or an integral foam having a density in the range from 0.8 to 0.1 $g/cm^3$, especially from 0.6 to 0.3 $g/cm^3$, or a compact material, for example a cured polyurethane binder.

Foams are particularly suitable matrix materials. Hybrid materials comprising a matrix material composed of a polyurethane foam preferably exhibit good adhesion between the matrix material and foamed pellets.

In one embodiment, the present invention also relates to a hybrid material comprising a matrix composed of a polyurethane foam and foamed pellets according to the present invention.

In a further embodiment, the present invention relates to a hybrid material comprising a matrix composed of a polyurethane foam, foamed pellets according to the present invention and further foamed pellets composed for example of a thermoplastic polyurethane.

In one embodiment, the present invention relates to a hybrid material comprising a matrix composed of a polyurethane integral foam and foamed pellets according to the present invention.

In a further embodiment, the present invention relates to a hybrid material comprising a matrix composed of a polyurethane integral foam, foamed pellets according to the present invention and further foamed pellets composed for example of a thermoplastic polyurethane.

An inventive hybrid material, comprising a polymer (PM) as matrix and inventive foamed pellets, can by way of example be produced by mixing the components used to produce the polymer (PM) and the foamed pellets optionally with further components, and reacting them to give the hybrid material, where the reaction is preferably effected under conditions under which the foamed pellets are essentially stable.

Suitable processes and reaction conditions for producing the polymer (PM), in particular an ethylene-vinyl acetate copolymer or a polyurethane, are known *per se* to those skilled in the art.

In a preferred embodiment, the inventive hybrid materials are integral foams, especially integral foams based on polyurethanes. Suitable processes for producing integral foams are known *per se* to those skilled in the art. The integral foams are preferably produced by the one-shot process using the low-pressure or high-pressure technique in closed, advantageously temperature-controlled molds. The molds are preferably made of metal, for example aluminum or steel. These procedures are described for example by Piechota and Röhr in "Integralschaumstoff" [Integral Foam], Carl-Hanser-Verlag, Munich, Vienna, 1975, or in "Kunststoff-Handbuch" [Plastics Handbook], volume 7, "Polyurethane" [Polyurethanes], 3rd edition, 1993, chapter 7.

If the inventive hybrid material comprises an integral foam, the amount of the reaction mixture introduced into the mold is set such that the molded bodies obtained and composed of integral foams have a density of 0.08 to 0.70 $g/cm^3$, especially of 0.12 to 0.60 $g/cm^3$. The degrees of compaction for producing the molded bodies having a compacted surface zone and cellular core are in the range from 1.1 to 8.5, preferably from 2.1 to 7.0.

It is therefore possible to produce hybrid materials having a matrix composed of a polymer (PM) and the inventive foamed pellets contained therein, in which there is a homogeneous distribution of the foamed beads. The inventive foamed pellets can be easily used in a process for the production of a hybrid material since the individual beads are free-flowing on account of their low size and do not place any special requirements on the processing. Techniques for homogeneously distributing the foamed pellets, such as slow rotation of the mold, can be used here.

Further auxiliaries and/or additives may optionally also be added to the reaction mixture for producing the inventive hybrid materials. Mention may be made by way of example of surface-active substances, foam stabilizers, cell regulators, release agents, fillers, dyes, pigments, hydrolysis stabilizers, odor-absorbing substances and fungistatic and bacteriostatic substances.

Examples of surface-active substances that can be used are compounds which serve to support homogenization of the starting materials and which optionally are also suitable for regulating the cell structure. Mention may be made by way of example of emulsifiers, for example the sodium salts of castor oil sulfates or of fatty acids and also salts of fatty acids with amines, for example diethylamine oleate, diethanolamine stearate, diethanolamine ricinoleate, salts of sulfonic acids, for example alkali metal or ammonium salts of dodecylbenzene- or dinaphthylmethanedisulfonic acid and ricinoleic acid; foam stabilizers, such as siloxane-oxyalkylene copolymers and other organopolysiloxanes, ethoxylated alkylphenols, ethoxylated fatty alcohols, paraffin oils, castor oil esters or ricinoleic esters, turkey red oil and peanut oil, and cell regulators, for example paraffins, fatty alcohols and dimethylpolysiloxanes. Oligomeric acrylates having polyoxyalkylene and fluoroalkane radicals as pendant groups are also suitable for improving the emulsifying action, cell structure and/or stabilization of the foam.

Suitable release agents for example include: reaction products of fatty acid esters with polyisocyanates, salts of amino group-comprising polysiloxanes and fatty acids, salts of saturated or unsaturated (cyclo)aliphatic carboxylic acids having at least 8 carbon atoms and tertiary amines, and also in particular internal release agents, such as carboxylic esters and/or carboxylic amides, produced by esterification or amidation of a mixture of montanic acid and at least one aliphatic carboxylic acid having at least 10 carbon atoms with at least difunctional alkanolamines, polyols and/or polyamines having molecular weights of 60 to 400, mixtures of organic amines, metal salts of stearic acid and organic mono- and/or dicarboxylic acids or anhydrides thereof or mixtures of an imino compound, the metal salt of a carboxylic acid and optionally a carboxylic acid.

Fillers, in particular reinforcing fillers, are understood to mean the customary organic and inorganic fillers, reinforcers, weighting agents, agents for improving abrasion behavior in paints, coating compositions etc., these being known *per se*. Specific examples which may be mentioned are: inorganic fillers such as siliceous minerals, for example sheet silicates such as an-tigorite, bentonite, serpentine, hornblendes, amphiboles, chrysotile, talc; metal oxides such as kaolin, aluminum oxides, titanium oxides, zinc oxide and iron oxides, metal salts such as chalk, barite and inorganic pigments such as cadmium sulfide, zinc sulfide and also glass and the like. Preference is given to using kaolin (china clay), aluminum silicate and coprecipitates of barium sulfate and aluminum silicate and also natural and synthetic fibrous minerals such as wollastonite, metal fibers and in particular glass fibers of various lengths, which may optionally have been sized. Examples of organic fillers that can be used are: carbon black, melamine, colophony, cyclopentadienyl resins and graft polymers, and also cellulose fibers, polyamide fibers, polyacrylonitrile fibers, polyurethane fibers, polyester fibers based on aromatic and/or aliphatic dicarboxylic esters, and in particular carbon fibers.

The inorganic and organic fillers can be used individually or as mixtures.

In an inventive hybrid material, the volume proportion of the foamed pellets is preferably 20 percent by volume or more, particularly preferably 50 percent by volume and more preferably 80 percent by volume or more and especially 90 percent by volume or more, in each case based on the volume of the inventive hybrid system.

The inventive hybrid materials, in particular hybrid materials having a matrix composed of cellular polyurethane, feature very good adhesion of the matrix material to the inventive foamed pellets. As a result, there is preferably no tearing of an inventive hybrid material at the interface between matrix material and foamed pellets. This makes it possible to produce hybrid materials which compared to conventional polymer materials, in particular conventional polyurethane materials, for a given density have improved mechanical properties, such as tear propagation resistance and elasticity.

The elasticity of inventive hybrid materials in the form of integral foams is preferably greater than 40% and particularly preferably greater than 50% according to DIN 53512.

The inventive hybrid materials, especially those based on integral foams, additionally exhibit high rebound resiliences at low density. Integral foams based on inventive hybrid materials are therefore outstandingly suitable in particular as materials for shoe soles. Light and comfortable soles with good durability properties are obtained as a result. Such materials are especially suitable as intermediate soles for sports shoes.

The inventive hybrid materials having a cellular matrix are suitable, for example, for cushioning, for example of furniture, and mattresses.

Hybrid materials having a matrix composed of a viscoelastic gel especially feature increased viscoelasticity and improved resilient properties. These materials are thus likewise suitable as cushioning materials, by way of example for seats, especially saddles such as bicycle saddles or motorcycle saddles.

Hybrid materials having a compact matrix are by way of example suitable as floor coverings, especially as covering for playgrounds, track and field surfaces, sports fields and sports halls.

The properties of the inventive hybrid materials can vary within wide ranges depending on the polymer (PM) used and in particular can be varied within wide limits by variation of size, shape and nature of the expanded pellets, or else by addition of further additives, for example also additional non-foamed pellets such as plastics pellets, for example rubber pellets.

The inventive hybrid materials have a high durability and toughness, which is made apparent in particular by a high tensile strength and elongation at break. In addition, inventive hybrid materials have a low density.

Further embodiments of the present invention can be found in the claims and the examples. It will be appreciated that the features of the subject matter/processes/uses according to the invention that are mentioned above and elucidated below are usable not only in the combination specified in each case but also in other combinations without departing from the scope of the invention. For example, the combination of a preferred feature with a particularly preferred feature or of a feature not characterized further with a particularly preferred feature etc. is thus also encompassed implicitly even if this combination is not mentioned explicitly.

**EXAMPLES**

**1. Materials**

polyol 1: non-fossil polyetherpolyol with OH-number of 112 and solely primary OH-groups (based on tetramethylene oxide, functionality : 2)

polyol 2: fossil polyetherpolyol with OH-number of 112 and solely primary OH-groups (based on tetramethylene oxide, functionality : 2)

chain extender 1: non-fossil 1,4-butanediol

chain extender 2: fossil 1,4-butanediol

isocyanate 1: non-fossil aliphatic isocyanate (1,5-pentamethylene diisocyanate)

Isocyanate 2: fossil aliphatic isocyanate (1,5-pentamethylene diisocyanate)

catalyst 1: tin(II) 2-ethylhexanoate (50% in DOA)

catalyst 2: tin(II) 2-ethylhexanoate (10% in DOA)

antioxidant 1: sterical hindered phenol

antioxidant 2: sterical hindered phenol

**2. TPU synthesis by hand casting**

Following examples TPU 1-8 (see composition table 1):

Polyol and chain extender were placed together in a container according to the mentioned amounts in table 1 and the container was stored in the heating oven at 100°C. When the mixture reached 100°C the catalyst and additives were added under vigorous stirring. Isocyanate 1 was added to the mixture at 90°C. At 110°C the mixture was poured on a heating plate (125°C) and the formed slab cured for 10 min. Afterwards the slab was transferred in the heating oven and was allowed to temper at 80°C for 15h. Then the polymer was crushed and the resulting granules were used for injection molding.

Table 1: examples by hand casting for TPU1-8

|  | TPU1 | TPU2 | TPU3 | TPU4 | TPU5 | TPU6 | TPU7 | TPU 8 |
|---|---|---|---|---|---|---|---|---|
| hard segment content | 21.10% | 30% | 35% | 37% | 40% | 45% | 50% | 21.10% |
| polyol 1 [g] | 1000 | 1000 | 1000 | 950 | 900 | 1000 | 1000 |  |
| Polyol 2 [g] |  |  |  |  |  |  |  | 1000 |
| isocyanate 1 [g] | 351.66 | 466.85 | 546.93 | 553.39 | 576.31 | 638.14 | 662.44 |  |
| isocyanate 2 [g] |  |  |  |  |  |  |  | 351.60 |
| chain extender 1 [g] | 114.09 | 182.51 | 229.31 | 237.60 | 255.52 | 296.17 | 319.40 |  |
| chain extender 2 [g] |  |  |  |  |  |  |  | 113.91 |
| catalyst 1 | 586μl | 100μl | 100μl | 98μl | 100μl | 100μl | 100μl | 586μl |

**3. TPU synthesis by extrusion**

Following examples TPU9 and TPU10 were prepared (see composition table 2):
The production of TPU9 and TPU 10 were carried out in a twin-screw extruder, ZSK58 MC, of the company Coperion with a process length of 48D (12 housings). The melt discharge from the extruder was carried out by a gear pump. After melting filtration, the polymer melt was processed by underwater granulation into granules, which were continuously dried in a heating vortex bed, at 40 - 90 ° C.

Polyol, chain extender and diisocyanate and, if necessary, a catalyst were dosed into the first zone. The supply of further additives, as described above, takes place in zone 8.

The housing temperatures are in the range 150 - 230 °C. The melt discharge and underwater pelletizing are carried out at melt temperatures of 210 - 245°C. The screw speed is between 180 and 240 1/min. The throughput is in the range of 180 - 220 kg/h.

Table 2: examples by extrusion for TPU9 and TPU10

|  | TPU9 | TPU10 |
|---|---|---|
| hard segment content | 21.10% | 37% |
| polyol 1 [parts] | 100 | 100 |
| isocyanate 1 [parts] | 34.91 | 58.26 |
| chain extender 1 [parts] | 11.34 | 25.01 |
| catalyst 1 [mL/min] |  | 1 |
| catalyst 2 [mL/min] | 2.3 |  |
| antioxidant 1 [parts] | 0.74 | 0.93 |
| antioxidant 2 [parts] | 0.45 | 0.56 |

4. **TPU blends**

Polymer 1: polystyrene PS 158K company BASF (2021)

Following examples Blends1-3 (see composition table 3):

The preparation of the following examples Blend 1 to 3 took place in a single-screw extruder, LabTech LE20-30, of the company LabTech Engineering Company LTD with 3-4 housings. The polymer melt was processed under water to receive a polymer strand. The strand was crushed, and the resulting granules were used for injection molding.

Table 3: examples TPU blends

|  | Blend1 | Blend2 | Blend3 |
|---|---|---|---|
| TPU8 [parts] | 95 | 90 | 85 |
| Polymer 1 [parts] | 5 | 10 | 15 |

After tempering for 20 hours at 100 °C, dynamic mechanical thermal analysis (DMA measurements) were carried out according to DIN EN ISO 6721-2011-08 at a heating rate of 2 K/min at a frequency of 1 Hz. In table 4 the storage modulus for $G'_{T-44°C}$ and $G'_{T-30°C}$ are shown. The main application temperatures are between T=-44°C-(-30°C). Therefore $\Delta T$ is 14°C. Over this range we calculated the gradient $G_{app}$.

Gradient $G_{app}$ is defined as:

$$G_{app} = \frac{G'(T = -30°C) - G'(T = -44°C)}{\Delta T} \qquad (I)$$

The results are also shown in table 4.

Table 4

| Example | G'(T=-30°C) [MPa] | G'(T=-44°C) [MPa] | $G_{app}$ |
|---|---|---|---|
| TPU1 | 20.3 | 21.1 | -0.1 |
| TPU2 | 25.5 | 38.9 | -1.0 |
| TPU3 | 38.1 | 64.3 | -1.9 |
| TPU5 | 56.9 | 102.2 | -3.2 |
| TPU6 | 88.8 | 156.2 | -4.8 |
| TPU7 | 133.1 | 232.8 | -7.1 |
| TPU9 | 15.3 | 16.5 | -0.1 |
| TPU10 | 52.8 | 100.1 | -3.38 |
| Blend 1 (+5%PS) | 21.9 | 23.8 | -0.1 |
| Blend 2 (+10% PS) | 29.3 | 31.6 | -0.2 |
| Blend 3 (+15%PS) | 31.3 | 31.9 | 0.0 |

## 5. Testing methods

The following measurement methods can be used for material characterization: DSC, DMA, TMA, NMR, FT-IR, GPC

| | |
|---|---|
| Density | DIN EN ISO 1183-1:2019-09, procedure A |
| Shore A hardness | DIN ISO 48-4:2021-02 (average value; indentation of 3s) |
| Tensile strength | DIN 53504:2017-03, test specimen S2, testing speed 200mm/min |
| Elongation at break | DIN 53504:2017-03, test specimen S2, testing speed 200mm/min |
| Tear resistance | DIN ISO 34-1, procedure B, method (b): 2016-09 |
| Abrasion | DIN ISO 4649:2021-06, procedure A, standard reference Elastomer No.1 |
| Rebound | DIN 53512:2000-4 |

## 6. Extrusion Process

The expanding process was conducted in a twin-screw extruder of company Coperion (ZSK 40). Table 5 shows the composition of the used TPU and additives.

Table 5: Overview of compounds used for expansion examples

| compounds used | TPU | Additive 1 | Additive 2 | Additive 3 |
|---|---|---|---|---|
| TPU | TPU 9 (Table 2) | | | |
| Mica coated with antimon-doped tin oxide (%) | | 4.5 | | |
| Copper Hydroxide Phosphate (%) | | 24.5 | | |
| Ester of mixed montanic acids (%) | | 1 | | |
| E 1185 A 10 000 (%) | | 70 | | |
| Nucleating Agent | | | Talcum 100 | |
| Polymer 2 | | | | HDPE Lupolen 4261 AG (company Lyon-dellbasell (2021)) |

The material was dried for minimum 5 h at 70 °C for a residual humidity lower than 0.02 wt. % directly before extrusion. If necessary different amounts of a TPU which was compounded in a separate extrusion process with 4,4-Diphenylmethandiisocyanat with a functionality of 2.05 (additive 1) was added during processing. As nucleating agent 0.1 % Talcum with a particle size of D50 = 5.6$\mu$m was added. As blowing agent $CO_2$ and $N_2$ was injected into the melt. As polymer blend partner HDPE (additive 3) was used in range from 0 to 25%. All added materials, additive 1 to 3 as well as blowing agents, were mixed homogeneously with the thermoplastic polyurethane. Table 6 shows the different compositions of example 1-4.

Table 6: Recipes and process details of eTPU material

| eTPU | Example 1 | Example 2 | Example 3 | Example 4 |
|---|---|---|---|---|
| TPU | TPU 9 | TPU 9 | TPU 9 | TPU 9 |
| Content of TPU (% b.w.) | 99.3 | 89.3 | 79.3 | 74.3 |
| Content of additive 1 (% b.w.) | 0.6 | 0.6 | 0.6 | 0.6 |
| Content of additive 2 (% b.w.) | 0.1 | 0.1 | 0.1 | 0.1 |
| Content of additive 3 (% b.w.) | 0 | 10 | 20 | 25 |
| Particle mass (mg) | 25 | 25 | 25 | 25 |
| Bulk density (g/L) | 125 | 115 | 115 | 125 |
| $CO_2$ ((% b.w) | 1.0 | 1.0 | 1.0 | 1.0 |
| $N_2$ ((% b.w) | 0.21 | 0.21 | 0.21 | 0.21 |
| Pressure in UWP (bar) | 10.1 | 10.1 | 10.1 | 10.1 |
| Temperature in UWP(°C) | 34 | 34 | 35 | 35 |

After mixing of all components in the extruder the material was first pressed through a gear pump with a temperature of 190 °C and then through a die plate heated up to 190 ° C. The granulate was cut and formed in the underwater pelletizing system (UWP). During the transport out of the UWP the particles expands under defined conditions of temperature and pressure of the water. Before drying the material for 5 h at 50 °C a centrifugal drier was used for separating the granulate and the water.

After drying, the bulk density of the resulting foamed beads is measured (according to DIN ISO 697: 1984-01).

Process details of all different examples and reference examples like the used water temperatures and -pressure, the amount of blowing agents $CO_2$ and $N_2$ as well as the particle mass and resulting bulk density are listed in table 6.

### 7. Vessel impregnation Process

To prepare expanded beads out of the vessel impregnation process, TPU 10 was given into a single-screw extruder, LabTech LE20-30, of the company LabTech Engineering Company LTD with 3-4 housings and afterwards strand granulated to achieve 20 mg compact particles.

These particles were afterwards foamed in a pressure vessel as described below.

Experiments are conducted in a closed pressure vessel (Impregnation vessel) at a filling level of 80% by volume and a phase ratio of about 0.41. The pressure vessel had an absolute volume of 3.2 l.

100 parts by weight of particles from strand granulated TPU 10, 217 parts by weight of water, and 0.08 parts by weight of a surface active substance (here Disponil LDBS25, diluted to 5 %) were heated into the pressure vessel together with 36 weight % (based on compact particles) of n-butane as blowing agent while steering.

At 50 °C, 0,5 kg of nitrogen as co-blowing agent was added. The liquid phase of the suspension was heated to the predeterminate impregnation temperature (IMT).

In this procedure, at IMT a defined pressure in gaseous phase (IMP) is formed.

After reaching the IMT, the pressure was released and the whole content of the vessel (suspension) was poured through a relaxation device into a vessel under atmospheric pressure (expansion vessel). Expanded beads are formed.

During the relaxation step, the pressure within the impregnation vessel was fixed with nitrogen to a certain level (squeezing pressure SP).

After removal of the dispersing agent and/or the assistant system (surfactant) and subsequent drying, the bulk density of the resulting foamed beads is measured.

Details concerning IMT, final pressure in the vessel and bulk density of individual example are listed in table 7.

Table 7: Data for the manufacturing expanded beads

| TPU | TPU 10 | | |
|---|---|---|---|
| Sample | Example 5 | Example 6 | Example 7 |
| IMT (°C) | 110 | 111,1 | 109 |
| IMP (bar) | 21,9 | 21,5 | 21,8 |
| Bulk density (BD) (g/L) | 69 | 80 | 76 |

## 8. Steam Chest Molding & Mechanics

In a next step the expanded material was molded to quadratic test plates with a length of 200 mm x 200 mm and thickness of 10 and 20 mm using steam chest molding machine of company Kurtz ersa GmbH (Boost Foamer K68). Additionally, the crack steam was carried out by the movable side of the tool. The molding parameters are listed in table 8.

Table 8: Processing conditions for steam chest molding of examples

| Example | Unit | Ex. 1-4 | | Ex. 5-7 | |
|---|---|---|---|---|---|
| Crack size | mm | 14 | 22 | 14 | 23 |
| Crack steam fixed side | bar | - | - | - | - |
| Crack steam fixed side | s | - | - | - | - |
| Crack steam movable side | bar | 0.4 | 0.4 | - | - |
| Crack steam movable side | s | 5 | 5 | - | - |
| Cross steam fixed side/ counter pressure | bar | 0.3/0 | 0.3/0 | 0.3/0 | 0.3/0 |
| Cross steam fixed side/ counter pressure | s | 10/0 | 10/0 | 20/0 | 20/0 |
| Cross steam movable side/ counter pressure | bar | 0.3/0 | 0.3/0 | 0.3/0 | 0.3/0 |
| Cross steam movable side/ counter pressure | s | 10/0 | 10/0 | 20/0 | 20/0 |
| Autoclave steam fixed / movable side | bar | 0.3 / 0.3 | 0.3 / 0.3 | 0.8/0.8 | 0.8/0.8 |
| Autoclave steam | s | 10 | 10 | 20 | 20 |

The different material were tested for different mechanical properties. The results are listed in table 9. Additionally all methods are described in the following

Tensile strength and elongation at break are measured with a universal testing machine, which is equipped with a 2.5 kN force sensor (class 0,5 (ab 10N), DIN EN ISO 7500-1, 2018), a long-stroke-extensometer (class 1 after DIN EN ISO 9513, 2013) and pneumatic clamps (6 bar, clamping jaws out of pyramid grid (Zwick T600 R)).

The specimens (150 mm x 25.4 mm x thickness of the test plate) are culled from a 200 x 200 x 10 mm test plate (dimensions could vary slightly due to shrinkage) with a cutting die. Before, the test plates were stored for at least 16 h under standardized climate conditions (23 $\pm$ 2 °C and 50 $\pm$ 5 % humidity). The measurement is also carried out in standard climate. For each specimen density is determined. Therefore, mass (precision scale; accuracy: $\pm$ 0.001 g) and thickness (caliper; accuracy: $\pm$ 0.01 mm, contact pressure 100 Pa, value is only measured once in the middle of the specimen) are measured. Length (150 mm) and width (25.4 mm) are known from the dimension of the cutting die.

The $L_E$-position (75mm) and the distance of the long-stroke-extensometer d (50 mm) are checked before stating the measurement. The specimen is placed on the upper clamp and the force is tared. Then the specimen is clamped und measurement could be started. The measurement is carried out with a testing speed of 100 mm/min and a force of 1 N. The calculation of tensile strength $\sigma_{max}$ (specified in MPa) is done by equation (III), which is the maximum tension. This tension can be identical to the tension at breakage. Elongation at break $\varepsilon$ (specified in %) is calculated using equation (IV). Three specimens are tested for each material. The mean value from the three measurements is given. If the test specimen tears outside the selected area, this is noted. A repetition with another test specimen is not performed.

$$\sigma_{max} = \frac{F_{max}}{d \cdot h} \qquad\qquad (III)$$

| | |
|---|---|
| $\sigma_{max}$ | = Tensile strength |
| $F_{max}$ | = Maximum tension [N] |
| D | = Thickness of the specimen [mm] |
| B | = Width of the specimen [mm] |

$$\varepsilon = \frac{L_B - L_0}{L_0} \cdot 100\% \qquad \text{(IV)}$$

| | |
|---|---|
| $\varepsilon$ | = Elongation at break |
| $L_B$ | = Length at breakage [mm] |
| $L_0$ | = Length before starting measurement [mm] |

**a. Compression Hardness**

For determination of the compression behavior of the molded plates three specimens with the dimensions 50 mm x 50 mm x original thickness of the plate (in general 20 mm but thickness can vary slightly due to shrinkage, skin is not removed) are taken from the plate by a band saw.

For each specimen the mass (precision scale; accuracy: $\pm$ 0.001 g) and the length and thickness (calliper; accuracy: $\pm$ 0.01 mm, contact pressure 100 Pa, value is only measured once in the middle of the specimen) are measured.

Compression behavior is then measured with a 50 kN force transducer (class 1 according to DIN EN ISO 7500-1:2018-06), a crosshead travel encoder (class 1 according to DIN EN ISO 9513:2013) and two parallel pressure plates (Diameter 2000 mm, max. permissible force 250 kN, max. permissible surface pressure 300 N/mm$^2$) without holes. For determining the density of the specimen, the measured mass, length and thickness values are entered into the test specifications of the software of the test machine from company Zwick. The thickness of the specimen is determined by the universal test machine via the 5 traverse path measuring system (accuracy: $\pm$ 0.25 mm). The measurement itself is carried out with a test speed of 50 mm/min and a pre-force of 1 N. The force in kPa is recorded at a stint of 10 and 50 and. The values of the 4th cycle are used for evaluation. The sample during the measurement is compressed to 76%.

Measurement is conducted from 3 specimens taken from one plate. As result the average from all three measurements is taken.

**b. Rebound**

The rebound is determined analogously to DIN 53512, April 2000; the deviation from the standard is the test specimen height which should be 12 mm, but in this test 20 mm is used in order to avoid "penetration through" the sample and measurement of the substrate.

Table 9: Mechanical properties of molded examples

| | Part Density (10 & 20 mm) (g/cm$^3$) | Tensile Strength (10 mm) (MPa) | Tensile Elongation (10 mm) (%) | Compression Hardness 10% (20 mm) (kPa) | Compression Hardness 50% (20 mm) (kPa) | Rebound (20 mm) (%) |
|---|---|---|---|---|---|---|
| Ex. 1 | 278/251 | 0.4 | 70 | 8 | 251 | 73 |
| Ex. 2 | 231/216 | 0.52 | 93 | 8 | 225 | 74 |
| Ex. 3 | 216/196 | 0.58 | 70 | 9 | 231 | 73 |
| Ex. 4 | 239/227 | 0.55 | 47 | 10 | 312 | 69 |
| Ex. 5 | 161/162 | 0.63 | 41 | 32 | 248 | 76 |
| Ex. 6 | 178/171 | 0.53 | 31 | 27 | 259 | 75 |
| Ex. 7 | 175/163 | 0.69 | 41 | 14 | 247 | 74 |

**Cited literature**

WO 94/20568 A1
WO 2007/082838 A1
WO 2017/030835 A1
WO 2013/153190 A1
WO 2010/010010 A1
TW 202012483
WO 2021/104536 A1
"Kunststoffhandbuch [Plastics Handbook], volume 7, Polyurethane [Polyurethanes]", Carl Hanser Verlag, 3rd edition 1993, chapter 3.1
WO 2014/150122 A1
WO 2014/150124 A1
EP 3053732 A1
WO 2016/146537 A1
EP17198591.4
"Kunststoffhandbuch [Plastics Handbook], volume 7, Polyurethane [Polyurethanes]", Carl Hanser Verlag, 3rd edition 1993, chapter 3.
Piechota and Röhr in "Integralschaumstoff" [Integral Foam], Carl-Hanser-Verlag, Munich, Vienna, 1975, or in "Kunststoff-Handbuch" [Plastics Handbook], volume 7, "Polyurethane" [Polyurethanes], 3rd edition, 1993, chapter 7

**Claims**

1. Foamed pellets comprising a composition (C) comprising a thermoplastic polyurethane obtainable or obtained by reacting at least the components (i) to (iii):

   (i) a polyisocyanate composition (IC) comprising pentamethylene diisocyanate;
   (ii) at least one chain extender (CE1),
   (iii) a polyol composition (PC),
   wherein the thermoplastic polyurethane has a calculated gradient $G_{app}$ in the range of from less than 0 to -5, determined according to general formula (I):

$$G_{app} = \frac{G'(T = -30°C) - G'(T = -44°C)}{\Delta T}$$

   $$(I)$$

   wherein G'(T=-30°C) and G'(T=-44°C) are determined by DMA according to DIN EN ISO 6721-2011-08 at a heating rate of 2 K/min at a frequency of 1 Hz using injection molded sheets with a thickness of 2 mm and which were tempered for 20h at 100 °C,
   wherein the hard segment content of the thermoplastic polyurethane is in the range of from 25% to 50%, calculated according to the formula (II):

$$HSC = \frac{n_{chainextender}(M_{chainextender} + M_{diisocyanate})}{m_{total}}$$

   $$(II).$$

2. The foamed pellets according to claim 1, wherein the storage modulus G' (20°C) determined according to DIN EN ISO 6721-2011-08 at a heating rate of 2 K/min at a frequency of 1 Hz using injection molded sheets with a thickness of 2 mm and which were tempered for 20h at 100 °C, is less than 55 MPa.

3. The foamed pellets according to claim 1 or 2, wherein the chain extender (CE1) is selected from the group consisting of propane-1,3-diol, ethane-1,2-diol, butane-1,4-diol, pentane-1,5-diol, hexane-1,6-diol and HQEE.

4. The foamed pellets according to any of claims 1 to 3, wherein the polyol composition comprises a polyol selected from the group consisting of polyetherols, polyesterols, such as polycaprolactone polyols, and polycarbonate polyols.

**5.** The foamed pellets according to any of claims 1 to 4, wherein the polyol composition comprises a polyol selected from the group consisting of polytetrahydrofurans having a number-average molecular weight Mn in the range from 500 g/mol to 2000 g/mol.

**6.** The foamed pellets according to any of claims 1 to 5, wherein the composition (C) comprises at least one further polymer (P2) in an amount in the range of from 0.1 to 30 % by weight based on the weight of the composition (C).

**7.** A process for the production of foamed pellets comprising the steps of

(i) providing a composition (C) comprising a thermoplastic polyurethane, wherein the thermoplastic polyurethane is obtained or obtainable by reacting at least the components (a) to (c):

(a) a polyisocyanate composition (IC) comprising pentamethylene diisocyanate;
(b) at least one chain extender (CE1),
(c) a polyol composition (PC);

(ii) impregnating the composition (C) with a blowing agent under pressure;
(iii) expanding the composition (C) by means of pressure decrease,
wherein the thermoplastic polyurethane has a calculated gradient $G_{app}$ in the range of from less than 0 to -5, determined according to general formula (I):

$$G_{app} = \frac{G'(T = -30°C) - G'(T = -44°C)}{\Delta T}$$

$$(I)$$

wherein G'(T=-30°C) and G'(T=-44°C) are determined by DMA according to DIN EN ISO 6721-2011-08 at a heating rate of 2 K/min at a frequency of 1 Hz using injection molded sheets with a thickness of 2 mm and which were tempered for 20h at 100 °C,
wherein the hard segment content of the thermoplastic polyurethane is in the range of from 25% to 50%, calculated according to the formula (II):

$$HSC = \frac{n_{chainextender}(M_{chainextender} + M_{diisocyanate})}{m_{total}}$$

$$(II).$$

**8.** Foamed pellets obtained or obtainable by a process according to claim 7.

**9.** The use of foamed pellets according to any of claims 1 to 6 or 8 for the production of a molded body.

**10.** The use according to claim 9, wherein the molded body is produced by means of fusion or bonding of the beads to one another.

**11.** The use according to claim 9 or 10, wherein the molded body is a shoe sole, part of a shoe sole, in particular a part of the outer shoe sole, part of a soccer shoe, a bicycle saddle, cushioning, a mattress, underlay, grip, protective film, a component in automobile interiors and exteriors.

**12.** The use of foamed pellets according to any of claims 1 to 6 or 8 in balls and sports equipment or as floor covering and wall paneling, especially for sports surfaces, track and field surfaces, sports halls, children's playgrounds and pathways.

**13.** A hybrid material comprising a matrix composed of a polymer (PM) and foamed pellets according to any of claims 1 to 6 or 8 or foamed pellets obtainable or obtained by a process according to claim 7.

**Patentansprüche**

1. Geschäumte Pellets, umfassend eine Zusammensetzung (C), umfassend ein thermoplastisches Polyurethan, das erhältlich ist oder erhalten wird durch Umsetzung mindestens der Komponenten (i) bis (iii):

   (i) eine Polyisocyanatzusammensetzung (IC), umfassend Pentamethylendiisocyanat;
   (ii) mindestens einen Kettenverlängerer (CE1),
   (iii) eine Polyolzusammensetzung (PC),
   wobei das thermoplastische Polyurethan einen berechneten Gradienten $G_{app}$ im Bereich von weniger als 0 bis -5 aufweist, bestimmt gemäß der allgemeinen Formel (I):

$$G_{app} = \frac{G'(T = -30°C) - G'(T = -44°C)}{\Delta T} \quad (\text{I})$$

   wobei G'(T=-30°C) und G'(T=-44°C) durch DMA gemäß DIN EN ISO 6721-2011-08 mit einer Aufheizrate von 2 K/min mit einer Frequenz von 1 Hz unter Verwendung von spritzgegossenen Folien mit einer Dicke von 2 mm bestimmt werden, die 20 h bei 100 °C getempert wurden,
   wobei der Hartsegmentgehalt des thermoplastischen Polyurethans im Bereich von 25 % bis 50 % liegt, berechnet gemäß der Formel (II):

$$HSC = \frac{n_{Kettenverlängerer}(M_{Kettenverlängerer} + M_{Diisocyanat})}{m_{Gesamt}} \quad (\text{II}).$$

2. Geschäumte Pellets nach Anspruch 1, wobei der Speichermodul G' (20 °C), bestimmt gemäß DIN EN ISO 6721-2011-08, mit einer Aufheizrate von 2 K/min mit einer Frequenz von 1 Hz unter Verwendung von Spritzgussfolien mit einer Dicke von 2 mm, die 20 h bei 100 °C getempert wurden, weniger als 55 MPa beträgt.

3. Geschäumte Pellets nach Anspruch 1 oder 2, wobei der Kettenverlängerer (CE1) ausgewählt ist aus der Gruppe bestehend aus Propan-1,3-diol, Ethan-1,2-diol, Butan-1,4-diol, Pentan-1,5-diol, Hexan-1,6-diol und HQEE.

4. Geschäumte Pellets nach einem der Ansprüche 1 bis 3, wobei die Polyolzusammensetzung ein Polyol ausgewählt aus der Gruppe bestehend aus Polyetherolen, Polyesterolen, wie Polycaprolactonpolyolen, und Polycarbonatpolyolen umfasst.

5. Geschäumte Pellets nach einem der Ansprüche 1 bis 4, wobei die Polyolzusammensetzung ein Polyol ausgewählt aus der Gruppe bestehend aus Polytetrahydrofuranen mit einem durchschnittlichen Molekulargewicht (Zahlenmittel) Mn im Bereich von 500 g/Mol bis 2000 g/Mol umfasst.

6. Geschäumte Pellets nach einem der Ansprüche 1 bis 5, wobei die Zusammensetzung (C) mindestens ein weiteres Polymer (P2) in einer Menge im Bereich von 0,1 bis 30 Gew.-% umfasst, bezogen auf das Gewicht der Zusammensetzung (C).

7. Verfahren zur Produktion von geschäumten Pellets, umfassend die Schritte:

   (i) Bereitstellen einer Zusammensetzung (C), umfassend ein thermoplastisches Polyurethan, wobei das thermoplastische Polyurethan durch Umsetzen mindestens der Komponenten (a) bis (c) erhalten wird oder erhältlich ist:

   (a) einer Polyisocyanatzusammensetzung (IC), umfassend Pentamethylendiisocyanat;
   (b) mindestens einem Kettenverlängerer (CE1),
   (c) einer Polyolzusammensetzung (PC),

   (ii) Imprägnieren der Zusammensetzung (C) mit einem Treibmittel unter Druck;
   (iii) Expandieren der Zusammensetzung (C) durch Druckentspannung,
   wobei das thermoplastische Polyurethan einen berechneten Gradienten $G_{app}$ im Bereich von weniger als 0 bis -5 aufweist, bestimmt gemäß der allgemeinen Formel (I):

$$G_{app} = \frac{G'(T = -30°C) - G'(T = -44°C)}{\Delta T} \quad (\text{I})$$

wobei G'(T=-30°C) und G'(T=-44°C) durch DMA gemäß DIN EN ISO 6721-2011-08 mit einer Aufheizrate von 2 K/min mit einer Frequenz von 1 Hz unter Verwendung von spritzgegossenen Folien mit einer Dicke von 2 mm bestimmt werden, die 20 h bei 100 °C getempert wurden,
wobei der Hartsegmentgehalt des thermoplastischen Polyurethans im Bereich von 25 % bis 50 % liegt, berechnet gemäß der Formel (II):

$$HSC = \frac{n_{Kettenverlängerer}(M_{Kettenverlängerer} + M_{Diisocyanat})}{m_{Gesamt}} \quad (\text{II}).$$

8. Geschäumte Pellets, die mittels eines Verfahrens nach Anspruch 7 erhalten werden oder erhältlich sind.

9. Verwendung von geschäumten Pellets nach einem der Ansprüche 1 bis 6 oder 8 zur Produktion eines Formkörpers.

10. Verwendung nach Anspruch 9, wobei der Formkörper durch Verschmelzen oder Bonden der Perlen miteinander produziert wird.

11. Verwendung nach Anspruch 9 oder 10, wobei der Formkörper eine Schuhsohle, ein Teil einer Schuhsohle, insbesondere ein Teil der äußeren Schuhsohle, ein Teil eines Fußballschuhs, ein Fahrradsattel, eine Polsterung, eine Matratze, eine Unterlage, ein Griff, eine Schutzfolie, ein Bauteil im Innenraum und im Außenbereich von Kraftfahrzeugen ist.

12. Verwendung von geschäumten Pellets nach einem der Ansprüche 1 bis 6 oder 8 in Bällen und Sportgeräten oder als Bodenbelag und Wandverkleidung, insbesondere für Sportflächen, Fahrbahnen und Feldoberflächen, Sporthallen, Kinderspielplätze und Wege.

13. Hybridmaterial, umfassend eine Matrix, die aus einem Polymer (PM) zusammengesetzt ist, und geschäumte Pellets gemäß einem der Ansprüche 1 bis 6 oder 8 oder geschäumte Pellets, erhältlich oder erhalten durch ein Verfahren gemäß Anspruch 7.

**Revendications**

1. Pastilles moussées comprenant une composition (C) comprenant un polyuréthane thermoplastique pouvant être obtenu ou obtenu par mise en réaction d'au moins les composants (i) à (iii) :

   (i) une composition polyisocyanate (IC) comprenant du diisocyanate de pentaméthylène ;
   (ii) au moins un extenseur de chaîne (CE1),
   (iii) une composition de polyol (PC),
   dans lesquelles le polyuréthane thermoplastique présente un gradient calculé $G_{app}$ dans la plage allant de moins de 0 à -5, déterminé selon la formule générale (I) :

$$G_{app} = \frac{G'(T = -30\ °C) - G'(T = -44\ °C)}{\Delta T} \quad (\text{I})$$

   dans laquelle G' (T = -30 °C) et G' (T = -44 °C) sont déterminés par DMA conformément à la norme DIN EN ISO 6721-2011-08 à une vitesse de chauffage de 2 K/min à une fréquence de 1 Hz en utilisant des feuilles moulées par injection d'une épaisseur de 2 mm et qui ont été trempées pendant 20 h à 100 °C,
   dans lesquelles la teneur en segments durs du polyuréthane thermoplastique est dans la plage allant de 25 % à 50 %, calculée selon la formule (II) :

$$HSC = \frac{n_{extenseur\ de\ chaîne}(M_{extenseur\ de\ chaîne} + M_{diisocyanate})}{m_{total}} \quad (\text{II}).$$

2. Pastilles moussées selon la revendication 1, dans lesquelles le module de conservation G' (20 °C) déterminé selon la norme DIN EN ISO 6721-2011-08 à une vitesse de chauffage de 2 K/min à une fréquence de 1 Hz en utilisant des feuilles moulées par injection d'une épaisseur de 2 mm et qui ont été trempées pendant 20 h à 100 °C, est inférieur à 55 MPa.

3. Pastilles moussées selon la revendication 1 ou 2, dans lesquelles l'extenseur de chaîne (CE1) est choisi dans le groupe constitué par le propane-1,3-diol, l'éthane-1,2-diol, le butane-1,4-diol, le pentane-1,5-diol, l'hexane-1,6-diol et HQEE.

4. Pastilles moussées selon l'une quelconque des revendications 1 à 3, dans lesquelles la composition de polyol comprend un polyol choisi dans le groupe constitué par les polyétherols, les polyesterols, tels que les polycaprolactone polyols, et les polypolycarbonate polyols.

5. Pastilles moussées selon l'une quelconque des revendications 1 à 4, dans lesquelles la composition de polyol comprend un polyol choisi dans le groupe constitué par les polytétrahydrofuranes ayant un poids moléculaire moyen en nombre Mn dans la plage de 500 g/mole à 2 000 g/mole.

6. Pastilles moussées selon l'une quelconque des revendications 1 à 5, dans lesquelles la composition (C) comprend au moins un autre polymère (P2) en une quantité dans la plage allant de 0,1 à 30 % en poids sur la base du poids de la composition (C).

7. Procédé pour la production de pastilles moussées comprenant les étapes de

(i) fourniture d'une composition (C) comprenant un polyuréthane thermoplastique, dans lequel le polyuréthane thermoplastique est obtenu ou peut être obtenu par mise en réaction d'au moins les composants (a) à (c) :

(a) une composition de polyisocyanate (IC) comprenant du diisocyanate de pentaméthylène ;
(b) au moins un extenseur de chaînes (CE1),
(c) une composition de polyol (PC) ;

(ii) imprégnation de la composition (C) avec un agent gonflant sous pression ;
(iii) expansion de la composition (C) au moyen d'une diminution de la pression,
dans lesquelles le polyuréthane thermoplastique présente un gradient calculé $G_{app}$ dans la plage allant de moins de 0 à -5, déterminé selon la formule générale (I) :

$$G_{app} = \frac{G'(T = -30\,°C) - G'(T = -44\,°C)}{\Delta T} \quad (I)$$

dans laquelle G' (T = -30 °C) et G' (T = -44 °C) sont déterminés par DMA conformément à la norme DIN EN ISO 6721-2011-08 à une vitesse de chauffage de 2 K/min à une fréquence de 1 Hz en utilisant des feuilles moulées par injection d'une épaisseur de 2 mm et qui ont été trempées pendant 20 h à 100 °C,
dans lesquelles la teneur en segments durs du polyuréthane thermoplastique est dans la plage allant de 25 % à 50 %, calculée selon la formule (II) :

$$HSC = \frac{n_{extenseur\ de\ chaîne}(M_{extenseur\ de\ chaîne} + M_{diisocyanate})}{m_{total}} \quad (II).$$

8. Pastilles moussées obtenues ou pouvant être obtenues par un procédé selon la revendication 7.

9. Utilisation de pastilles moussées selon l'une quelconque des revendications 1 à 6 ou 8 pour la fabrication d'un corps moulé.

10. Utilisation selon la revendication 9, dans laquelle le corps moulé est produit par fusion ou liaison des billes les unes aux autres.

11. Utilisation selon la revendication 9 ou 10, dans laquelle le corps moulé est une semelle de chaussure, une partie d'une semelle de chaussure, en particulier une partie de la semelle extérieure de chaussure, une partie d'une chaussure de football, une selle de bicyclette, un rembourrage, un matelas, une sous-couche, une poignée, un film protecteur, un composant dans des intérieurs et des extérieurs d'automobile.

12. Utilisation de pastilles moussées selon l'une des revendications 1 à 6 ou 8 dans des ballons et des équipements sportifs ou comme revêtement de sol et panneau mural, en particulier pour des surfaces de sport, des surfaces de piste et de terrain, des salles de sport, des terrains de jeux pour enfants et des sentiers.

13. Matériau hybride comprenant une matrice composée d'un polymère (PM) et de pastilles moussées selon l'une quelconque des revendications 1 à 6 ou 8 ou de pastilles moussées pouvant être obtenues ou obtenues par un procédé selon la revendication 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9420568 A1
- WO 2007082838 A1
- WO 2017030835 A
- WO 2013153190 A1
- WO 2010010010 A1
- TW 202012483
- EP 2836543 B1
- WO 2021104536 A1
- WO 2007082838 A
- WO 2014150122 A
- WO 2014150124 A1
- EP 1979401 B1
- US 20150337102 A
- EP 2872309 B1
- EP 3053732 A
- WO 16146537 A
- EP 17198591
- WO 2017030835 A1
- WO 2014150122 A1
- EP 3053732 A1
- WO 2016146537 A1

### Non-patent literature cited in the description

- Polyurethane [Polyurethanes. Kunststoffhandbuch [Plastics Handbook. Carl Hanser Verlag, 1993, vol. 7
- Kunststoff-Taschenbuch [Plastics Handbook. Hanser-Verlag, 1998
- **PIECHOTA** ; **RÖHR**. Integralschaumstoff'' [Integral Foam. Carl-Hanser-Verlag, 1975
- Polyurethane'' [Polyurethanes. Kunststoff-Handbuch'' [Plastics Handbook. 1993, vol. 7